# EUROPEAN PATENT SPECIFICATION

(11) **EP 2 789 925 B1**
(45) Date of publication and mention of the grant of the patent: **12.10.2016**
(21) Application number: 12855363.3
(22) Date of filing: 28.11.2012
(51) Int. Cl.: F24F 11/02, F24F 11/00, G05D 23/19

(54) **AIR CONDITIONER**
KLIMAANLAGE
CLIMATISEUR

(30) Priority: 09.12.2011 JP 2011269700; 26.12.2011 JP 2011283204
(43) Date of publication of application: 15.10.2014
(73) Proprietor: Panasonic Corporation, Osaka 571-8501 (JP)
(72) Inventor: IUCHI, Akira, Osaka 540-6207 (JP)
(74) Representative: Eisenführ Speiser
(86) International application number: PCT/JP2012/007642
(87) International publication number: WO 2013/084449

(56) References cited:
- JP-A- H0 560 362
- JP-A- H06 294 539
- JP-A- H06 294 540
- JP-A- H09 170 797
- JP-A- 2004 353 973
- JP-A- 2009 092 282
- JP-A- 2010 060 208
- JP-A- 2010 085 076
- JP-A- 2011 080 653
- JP-A- 2011 122 732
- JP-B1- 4 125 351
- 'Toriatsukai Setsumeisho Room Air Conditioner (Kateiyo)' SHITSUNAI UNIT HINBAN CS-X222C (GAI 24 KISHU) 10 GATSU 21 NICHI MATAWA 11 GATSU 21 NICHI NI HATSUBAI 21 October 2011, page 1, 10, 12, 13, 31, XP055135825 Retrieved from the Internet: <URL:http://dl-ctlg.panasonic.jp/ manual/cs/cs 12x 22 56 02.pdf>
- PRESS RELEASE ROOM AIR CONDITIONER 'X SERIES' O HATSUBAI 06 September 2011, XP055135824 Retrieved from the Internet: <URL:http://panasonic.co.jp/corp/news/offic ial.data/ data.dir/jn110906-1/jn110906-1.html>

## Description

### TECHNICAL FIELD

The disclosure relates to an air conditioner having energy saving operational function.

### BACKGROUND ART

For example, Patent Document 1 discloses a conventional air conditioner of this type. After a predetermined period elapses with stable indoor temperature around user setting temperature, the air conditioner according to Patent Document 1 is configured to perform air conditioning operation while adjusting target temperature so as to be higher than the user setting temperature during cooling operation and so as to be lower than the user setting temperature during heating operation.

### PATENT DOCUMENT

Patent Document 1: JP No. 2010-151398 A
Patent document 2 discloses an air conditioner according to the preamble of claim 1. Patent Document 2: JP No. 2011-122732 A

### SUMMARY OF THE INVENTION

### Problems to be solved by the Invention

However, the air conditioner according to Patent Document 1 automatically changes the user setting temperature. A user may feel such change to be uncomfortable.

It is an object of the invention to solve the problem of the conventional art and provide an air conditioner that is capable of keeping user's comfort as well as performing energy saving operation.

### Means to be Solved the Problem

In order to solve the problem of the conventional art, an air conditioner according to the invention includes:
an indoor temperature detection device which detects an indoor temperature;
a human body detection device which detects a motion of a human body; and
a remote control device which sets a reference indoor setting temperature; wherein,
when an activity amount based on the motion of the human body detected by the human body detection device is larger than a predetermined amount, the air conditioner controls an air condition so that the indoor temperature is adjusted to the reference indoor setting temperature set with the remote control device,
when the activity amount is smaller than the predetermined amount, the air conditioner controls the air condition so that the indoor temperature is adjusted to a corrected indoor setting temperature obtained by adding a correction value to the reference indoor setting temperature, and
the correction value is varied so as to increase and decrease periodically in accordance with a predetermined pattern.

### Effect of the Invention

The air conditioner according to the disclosure is capable of keeping user's comfort as well as performing energy saving operation.

### BRIEF DESCRIPTION OF THE DRAWINGS

These aspects and features of the invention will be apparent from the following description concerning a preferred embodiment with respect to the accompanying drawings, in which:
Fig. 1 is an outer perspective view of an air conditioner according to an embodiment of the invention;
Fig. 2 is a diagram showing a schematic configuration of a refrigeration cycle in the air conditioner in Fig. 1;
Fig. 3 is a diagram schematically showing a detectable region with the human body detection sensors;
Fig. 4 is a flowchart of a determination flow for switching from the temperature control for normal air conditioning operation to the rhythmic temperature control during cooling operation;
Fig. 5 is a flowchart of a determination flow for switching from the rhythmic temperature control to the temperature control for normal air conditioning operation during cooling operation;
Fig. 6 is a graph showing a variation pattern of a correction value during cooling operation;
Fig. 7 is a graph showing a modified example of a variation pattern of the correction value during cooling operation;
Fig. 8 is a graph showing an exemplifying setting of the reference indoor setting temperature, the correction value, and the corrected indoor setting temperature during cooling operation;
Fig. 9A is a graph showing a relation between the correction value and the indoor temperature during cooling operation;
Fig. 9B is a graph showing a relation between the correction value and the electric power consumption during cooling operation;
Fig. 10 is a flowchart of a determination flow for switching from the temperature control for normal air conditioning operation to the rhythmic temperature control during heating operation;
Fig. 11 is a flowchart of a determination flow for switching from the rhythmic temperature control to the temperature control for normal air conditioning operation during heating operation;
Fig. 12 is a graph showing a variation pattern of the correction value during heating operation;
Fig. 13 is a graph showing a modified example of a variation pattern of the correction value during heating operation; and
Fig. 14 is a graph showing an exemplifying setting of the reference indoor setting temperature, the correction value, and the corrected indoor setting temperature during heating operation.

### DESCRIPTION OF EMBODIMENTS

An air conditioner according to the disclosure includes: an indoor temperature detection device which detects an indoor temperature; a human body detection device which detects a motion of a human body; and a remote control device which sets a reference indoor setting temperature; wherein when an activity amount based on the motion of the human body detected by the human body detection device is larger than a predetermined amount, the air conditioner controls air condition so that the indoor temperature is adjusted to the reference indoor setting temperature set with the remote control device, when the activity amount is smaller than the predetermined amount, the air conditioner controls the air condition so that the indoor temperature is adjusted to corrected indoor setting temperature obtained by adding a correction value to the reference indoor setting temperature, and the correction value is varied so as to increase and decrease periodically in accordance with a predetermined pattern. This configuration is capable of keeping user's comfort as well as performing energy saving operation.

The corrected indoor setting temperature is preferably set to be lower than the reference indoor setting temperature during heating operation. This configuration is capable of keeping user's comfort as well as performing energy saving operation.

A variation range of increasing and decreasing of the correction value is preferably different between before and after a predetermined period elapses from a start of the air condition control in accordance with the corrected indoor setting temperature. This configuration is capable of keeping user's comfort as well as performing energy saving operation.

After a while from the start of the air condition control in accordance with the corrected indoor setting temperature, temperature on a wall of an air conditioned room is unstable and the indoor temperature tends to be varied easily by radiation heat from the wall.

A variation range of the correction value before the predetermined period elapses from the start of the air condition control in accordance with the corrected indoor setting temperature is preferably smaller than a variation range of the correction value after the predetermined period elapses from the start of the air condition control in accordance with the corrected indoor setting temperature. This configuration is capable of making variation in temperature less sensible. After the predetermined period elapses from the start of the air condition control in accordance with the corrected indoor setting temperature, in other words, after the temperature on the wall of the air conditioned room is stabilized, the variation range of the correction value is enlarged so that the energy saving feature can be further improved.

The air conditioner preferably further includes a compressor which compresses a refrigerant, the compressor is stopped when a predetermined period elapses in a state where a difference between the indoor temperature and the corrected indoor setting temperature is equal to or more than a predetermined difference, and the compressor is restarted when a difference between the indoor temperature and the reference indoor setting temperature is equal to or more than a predetermined difference after the compressor is stopped. This configuration is capable of causing the compressor to be restarted at earlier timing and improving user's comfort.

The correction value preferably varies stepwise. This configuration achieves reduction in electric power consumption without affecting user's comfort.

The air conditioner is preferably configured to perform wind hit operation of blowing toward the human body and wind avoided operation of blowing so as to avoid the human body, and the air conditioner is configured not to perform the air condition control of adjusting the indoor temperature to the corrected indoor setting temperature during wind avoided operation. This configuration is capable of keeping comfort when the user is sensitive to temperature.

The remote control device preferably includes a command unit that commands forcible air conditioning operation in accordance with the corrected indoor setting temperature. This configuration achieves air conditioning operation of the high energy saving feature with user operation of the command unit when the user desires improved energy saving.

When the activity amount exceeds the predetermined amount while the air conditioner performs air conditioning operation so as to adjust the indoor temperature to the corrected indoor setting temperature, the air conditioner preferably varies stepwise the correction value so as to approximate the corrected indoor setting temperature to the reference indoor setting temperature. If the correction value is rapidly zeroized instantaneously when the activity amount exceeds the predetermined amount, rotational speed of the compressor is rapidly varied, so that the indoor temperature can be varied too much or electric power consumption can be increased. The configuration described above is capable of suppressing occurrence of such a state.

The corrected indoor setting temperature is preferably higher than the reference indoor setting temperature during cooling operation. This configuration achieves energy saving operation also during cooling operation.

Embodiment of the invention is described hereinafter with reference to the drawings, but the invention is not limited by the embodiment.

### (Embodiment)

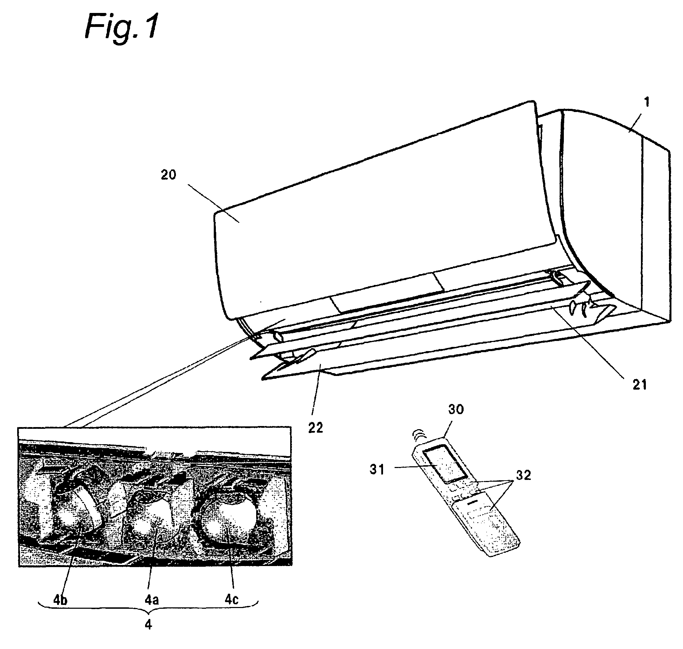

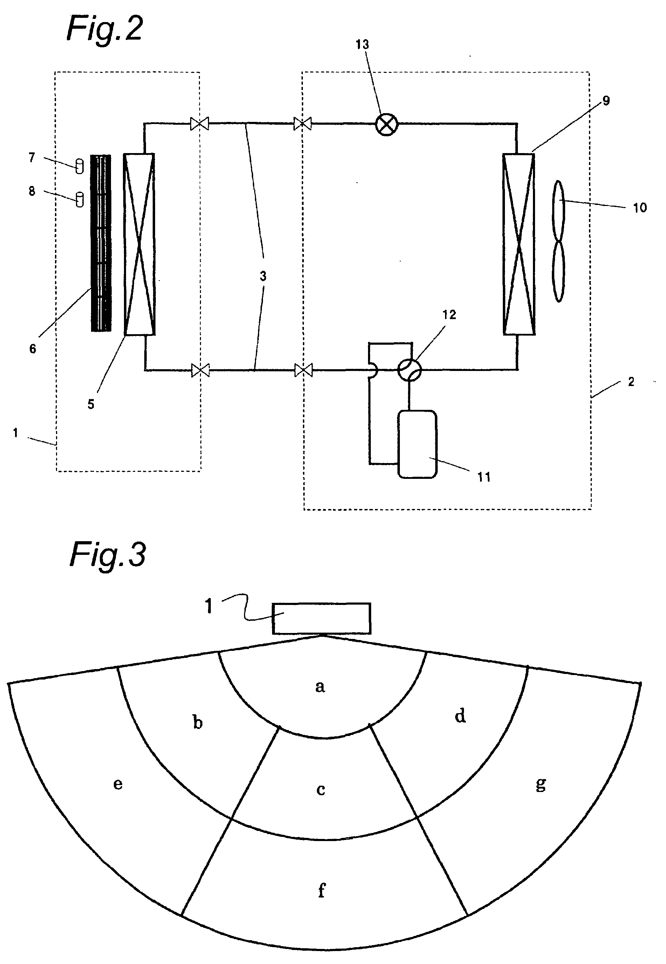

Fig. 1 includes an outer appearance perspective view and a principal part configuration view of an indoor unit included in an air conditioner according to the embodiment. Fig. 2 is a diagram showing a schematic configuration of a refrigeration cycle in the air conditioner according to the embodiment.

The air conditioner according to the embodiment includes an indoor unit 1 located in a room, an outdoor unit 2 located outdoor, and refrigerant piping 3 that connects the indoor unit 1 and the outdoor unit 2.

The indoor unit 1 includes an indoor heat exchanger 5 which exchanges heat between indoor air and a refrigerant, and an indoor fan 6 which promotes exchange of heat in the indoor heat exchanger 5 and which blows into a room. The indoor unit 1 further includes a temperature sensor 7 exemplifying indoor temperature detection device which detects indoor temperature, and a humidity sensor 8 exemplifying room humidity detection device which detects room humidity.

The outdoor unit 2 includes an outdoor heat exchanger 9 which exchanges heat between outdoor air and a refrigerant, and an outdoor fan 10 which promotes exchange of heat in the outdoor heat exchanger 9 and blows. The outdoor unit 2 further includes a compressor 11 which compresses the refrigerant and discharges the refrigerant of high temperature, a four-way valve 12 which switches between a forward flow and a backward flow of the refrigerant, and a decompressor 13 which decompresses the refrigerant.

The refrigeration cycle is configured that the refrigerant flows through the compressor 11, the four-way valve 12, the outdoor heat exchanger 9, the decompressor 13, the indoor heat exchanger 5, the four-way valve 12, and the compressor 11, in this order during cooling operation. The flow of the refrigerant is reversed by switching the four-way valve 12 during heating operation.

The indoor unit 1 has an air outlet 21 above which human body detection sensors 4 exemplifying human body detection device are located. The human body detection sensors 4 include three pyroelectric infrared sensors 4a to 4c and detect presence of a human and motion of the human in the room.

The human body detection sensors 4 according to the embodiment are located above the air outlet 21. The embodiment is, however, not limited to this configuration. For example, the human body detection sensors 4 can be located at a front panel 20. Furthermore, the human body detection sensors 4 according to the embodiment include the three pyroelectric infrared sensors 4a to 4c. The disclosure is, however, not limited to this configuration. For example, the human body detection sensors 4 can include two or less, or four or more infrared sensors. The number of the infrared sensors can be set appropriately in accordance with the size of a room, the level of power of the air conditioner, and the like. Furthermore, the human body detection sensors 4 are not necessarily fixed but can be shifted horizontally. The infrared sensors are not limited to the pyroelectric type, but have only to be capable of detecting a position and motion of a human. For example, the infrared sensors can be of a thermopile type.

The air conditioner according to the embodiment includes the front panel 20 that is located on the front side of the indoor unit 1 so as to open a front opening (not shown) while in air conditioning operation and close the front opening while not in air conditioning operation. The indoor unit 1 is provided, on the front side, with the air outlet 21 which blows into a room. There are provided, near the air outlet 21, a vertical blade 22 which vertically redirects wind blown out of the air outlet 21 and a horizontal blade (not shown) which horizontally redirects the wind blown out of the air outlet 21.

The air conditioner according to the embodiment further includes a remote control device 30 which commands operation to the indoor unit 1. The remote control device 30 includes a display unit 31 which displays operation information and other information, and an operation unit 32 which changes a setting or commands. The operation unit 32 has a plurality of buttons, for example.

A user operates the remote control device 30 so as to command cooling operation or heating operation and set reference indoor setting temperature. When the remote control device 30 is operated for normal air conditioning, air conditioning operation is performed with the reference indoor setting temperature as target temperature.

Described next is a human body detection method performed by the air conditioner thus configured. The human body detection method described in the embodiment is just an example, and the disclosure is not to be limited to this human body detection method.

Fig. 3 is a diagram schematically showing a detectable region with the human body detection sensors. The three human body detection sensors 4 are located appropriately in the embodiment, so as to enable human body detection in a plurality of regions "a" to "g" as indicated in Fig. 3.

For example, the infrared sensor 4a is configured to be capable of detecting the regions "a", "b", "c", and "d". The infrared sensor 4b is configured to be capable of detecting the regions "b", "c", "e", and "f". The infrared sensor 4c is configured to be capable of detecting the regions "c", "d", "f", and "g". This configuration achieves determination that a human body is located in the region "b" if the infrared sensors 4a and 4b detect a human body and the infrared sensor 4c does not detect any human body. There are seven detectable regions with the human body detection sensors 4 in the embodiment. The disclosure is, however, not limited to this configuration. For example, the number of the detectable regions with the human body detection sensors 4 can be less than seven or more than seven.

The level of an activity amount of a human body is determined in accordance with a signal (motion of the human body) outputted from the human body detection sensor 4 in the embodiment. The activity amount of a human body is determined in three levels of "large", "moderate", and "small". The activity amount is determined to be "large" or "moderate" when motion of a human body is large (the activity amount is larger than a predetermined amount). In particular, the activity amount is determined to be "large" when the motion of the human body is hard. The activity amount is determined to be "small" when motion of a human body is small (the activity amount is less than the predetermined amount).

In the embodiment, the activity amount of a human body is determined in three levels in accordance with the number of times of human body detection in a predetermined detection period (e.g. two minutes) with the human body detection sensors 4. More specifically, the activity amount is determined to be "small" if the number of times of human body detection is less than a predetermined number of times X. In contrast, the activity amount is determined to be "moderate" or "large" if the number of times of human body detection is more than a predetermined number of times Y (X < Y).

Described next is temperature control in air conditioning operation.

The air conditioner according to the embodiment is configured to perform temperature control for normal air conditioning operation and rhythmic temperature control. The disclosure is not limited to these temperature control operations. The air conditioner can be configured to perform other temperature control operations instead of these temperature control operations.

During the temperature control for normal air conditioning operation, air conditioning operation is performed in accordance with the reference indoor setting temperature set with the remote control device 30. More specifically, air in a room is conditioned by controlling the elements in the refrigeration cycle such as the compressor 11 and the decompressor 13 so that the indoor temperature detected by the temperature sensor 7 is adjusted to the reference indoor setting temperature (e.g. 25 °C) set with the remote control device 30.

During the rhythmic temperature control, air conditioning operation is performed in accordance with corrected indoor setting temperature obtained by adding a correction value to the reference setting temperature set with the remote control device 30. More specifically, air in a room is conditioned by controlling the elements in the refrigeration cycle so that the indoor temperature detected by the temperature sensor 7 is adjusted to the corrected indoor setting temperature and the corrected indoor setting temperature is varied up and down within a predetermined range. The rhythmic temperature control achieves air conditioning operation with saved energy without affecting comfort.

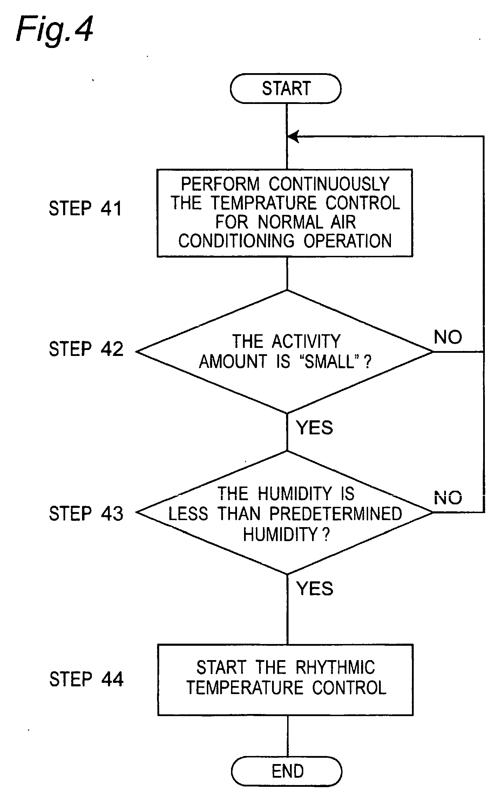

Fig. 4 is a flowchart of a determination flow for switching from the temperature control for normal air conditioning operation to the rhythmic temperature control during cooling operation.

Initially in step 41, the temperature control for normal air conditioning operation is performed, in other words, air conditioning operation is performed in accordance with the reference indoor setting temperature.

In step 42, the human body detection sensors 4 determine whether or not the activity amount is "small". If the activity amount is determined to be "small", the process proceeds to step 43. In contrast, if the activity amount is determined not to be "small", the process returns to step 41 and normal air conditioning operation is performed. The activity amount is used as a determination reference value because a human body has less motion in a rest state when the activity amount is "small". In this case, even when the indoor temperature is varied slightly, a human will be unlikely to sense such variation. More specifically, the rhythmic temperature control is performed under the condition of a small activity amount, so as to achieve air conditioning operation that does not affect user's comfort.

In step 43, it is determined whether or not humidity detected by the humidity sensor 8 is less than predetermined humidity (e.g. 60%RH). If the humidity is determined to be less than the predetermined humidity, the process proceeds to step 44 and the rhythmic temperature control is started. In contrast, if the humidity is determined to be equal to or more than the predetermined humidity, the process returns to step 41 and normal air conditioning operation is performed. The humidity is used as a determination reference value because, if control is performed by increasing setting temperature with high humidity during cooling operation, a human body possibly feels more discomfort. More specifically, the rhythmic temperature control is performed under the condition of low humidity, so as to achieve air conditioning operation that does not affect user's comfort.

As described above, the activity amount is determined in step 42 and then the humidity is determined in step 43. The disclosure is, however, not limited to the above configuration. For example, the orders of steps 42 and 43 can be replaced with each other. More specifically, the humidity can be determined and then the activity amount can be determined.

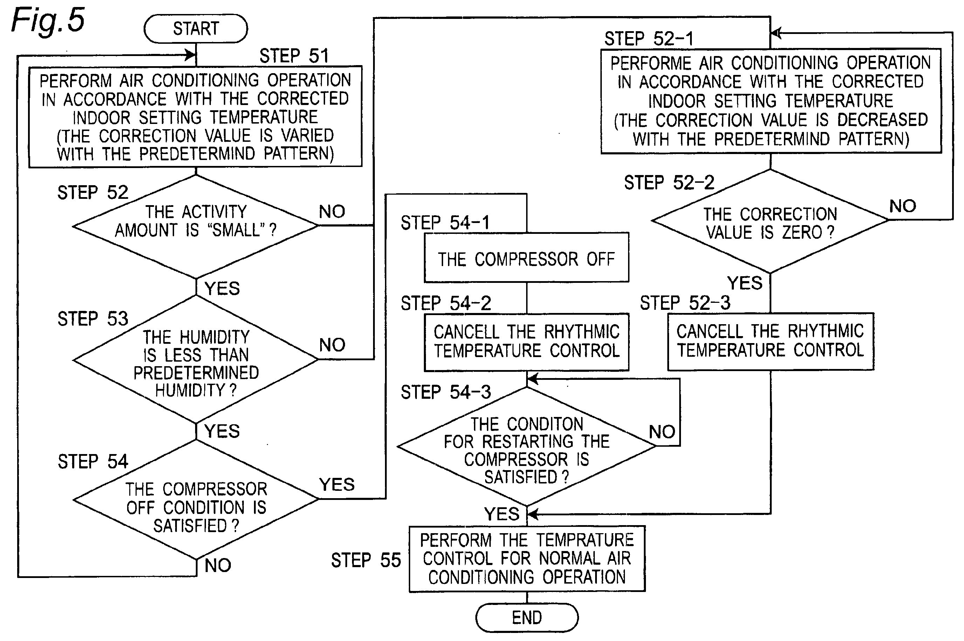

Fig. 5 is a flowchart of a determination flow for switching from the rhythmic temperature control to the temperature control for normal air conditioning operation during cooling operation.

Initially in step 51, air conditioning operation is performed in accordance with the corrected indoor setting temperature that is obtained by adding the correction value to the reference indoor setting temperature. More specifically, the elements in the refrigeration cycle are controlled so that the indoor temperature is adjusted to the corrected indoor setting temperature.

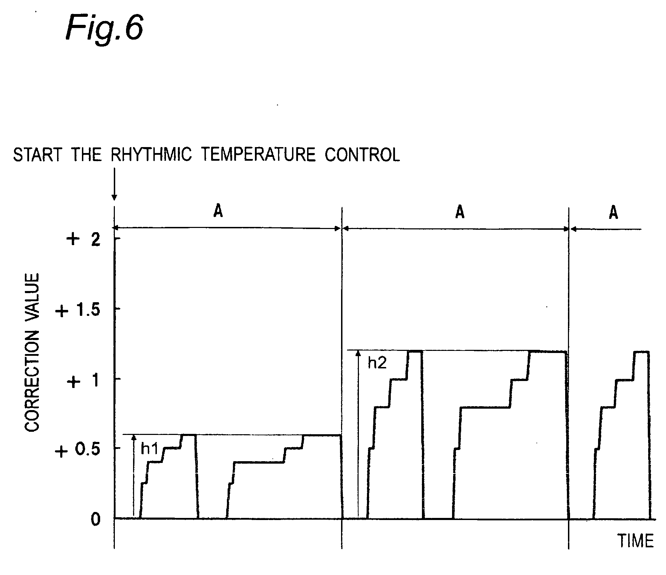

As indicated in Fig. 6, the correction value is varied so as to increase and decrease periodically in accordance with a predetermined pattern in the rhythmic temperature control. The correction value according to the embodiment is set to vary stepwise within the range from 0 °C to 1.2 °C and repeat a cycle of a pattern "A" that has two peak values.

Furthermore, the correction value according to the embodiment is set so that a variation range (maximum value) is different between before and after a predetermined period (e.g. 60 minutes) elapses from the start of the rhythmic temperature control. More specifically, a variation range h1 of the first pattern "A" is smaller than (e.g. a half of) a variation range h2 of the second and following patterns "A". The predetermined period is preliminarily set on the basis of a test or the like.

The energy saving feature can be improved by increase in area of a figure that is surrounded with the variation pattern of the correction value and the temporal axis. The correction value is varied stepwise in the embodiment. It is thus possible to increase the area and further improve the energy saving feature.

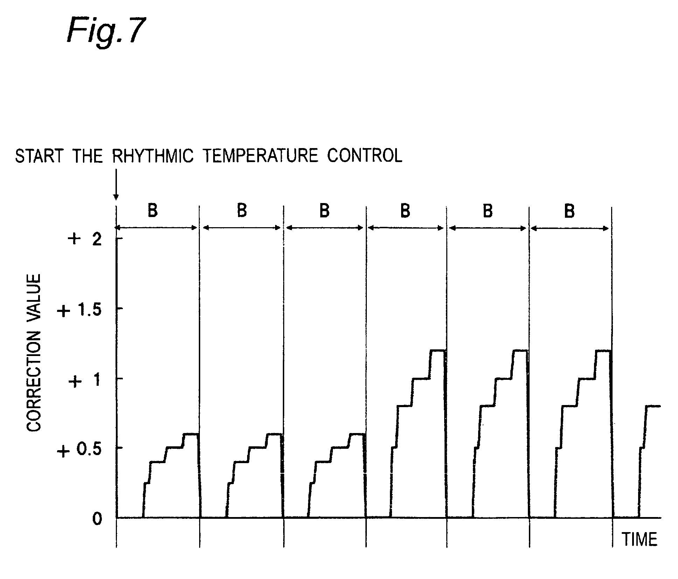

As exemplified in Fig. 7, the correction value can be alternatively set to repeat a cycle of a pattern "B" that has one peak value.

In step 52, the human body detection sensors 4 determine whether or not the activity amount is "small". If the activity amount is determined to be "small", the process proceeds to step 53. In contrast, if the activity amount is determined not to be "small", the process proceeds to step 52-1.

In step 53, it is determined whether or not the room humidity is less than the predetermined humidity as the condition for starting the rhythmic temperature control. If the room humidity is less than the predetermined humidity, the process proceeds to step 54. In contrast, if the room humidity is equal to or more than the predetermined humidity, the process proceeds to step 52-1. The predetermined humidity is preliminarily set in accordance with set temperature.

In step 54, it is determined whether or not a condition for stopping the compressor 11 (a compressor OFF condition) is satisfied. If the condition for stopping the compressor 11 is satisfied, the process proceeds to step 54-1. In contrast, if the condition for stopping the compressor 11 is not satisfied, the process returns to step 51 and the rhythmic temperature control is performed continuously. In the embodiment, the compressor 11 is stopped under the condition that a predetermined period elapses in a state where a difference between the indoor temperature and the corrected indoor setting temperature is equal to or more than a predetermined difference.

The condition for stopping the compressor 11 is not limited to the above. For example, another condition can be added as a condition for stopping the compressor 11. The predetermined temperature and the predetermined period are preliminarily set on the basis of a test or the like. The predetermined temperature and the predetermined period can be changed appropriately in accordance with the system.

In step 52-1, air conditioning operation is performed with the corrected indoor setting temperature as the target temperature without cancellation of the rhythmic temperature control. The correction value according to the embodiment is set not in accordance with the pattern "A" but so as to decrease stepwise. If the correction value is rapidly zeroized, rotational speed of the compressor 11 is rapidly varied, so that the indoor temperature can be varied too much or electric power consumption can be increased. The correction value, which is set to decrease stepwise, suppresses occurrence of such a state.

In step 52-2, it is determined whether or not the correction value is zero. If the correction value is not zero, the process returns to step 52-1. In contrast, if the correction value is zero, the process proceeds to step 52-3.

In step 52-3, the rhythmic temperature control is cancelled. When the rhythmic temperature control is cancelled, the process proceeds to step 55 and the temperature control for normal air conditioning operation is performed.

In step 54-1, the compressor 11 is stopped (compressor OFF).

In step 54-2, the rhythmic temperature control is cancelled. The compressor 11 is not in operation in this case, so that the correction value can be rapidly zeroized to cancel the rhythmic temperature control.

In step 54-3, it is determined whether or not a condition for restarting the compressor 11 is satisfied. If the condition for restarting the compressor 11 is satisfied, the process proceeds to step 55, so that the compressor 11 is restarted and normal air conditioning operation control is performed.

Whether or not the condition for restarting the compressor 11 is satisfied is preferably determined by whether or not a difference between the reference indoor setting temperature and the indoor temperature reaches a predetermined difference. For example, the difference between the reference indoor setting temperature and the indoor temperature is larger than the difference between the corrected indoor setting temperature and the indoor temperature during cooling operation. The compressor 11 can be restarted earlier by restarting the compressor 11 when the difference between the reference indoor setting temperature and the indoor temperature reaches a predetermined difference rather than by restarting the compressor 11 when the difference between the corrected indoor setting temperature and the indoor temperature reaches a predetermined difference. This configuration achieves prevention of affecting the environment in the room. The difference between the indoor temperature and the corrected indoor setting temperature as the condition for stopping the compressor 11 and the difference between the indoor temperature and the reference indoor setting temperature as the condition for restarting the compressor 11 can be values equal to each other or different from each other.

If the condition for starting the rhythmic temperature control described with reference to Fig. 4 is satisfied while the temperature control for normal air conditioning operation is performed in step 55, air conditioning operation is performed with switching from the temperature control for normal air conditioning operation to the rhythmic temperature control.

As described above, the activity amount is determined in step 52, the humidity is determined in step 53, and then whether or not to stop the compressor is determined in step 54. The disclosure is, however, not limited to the above configuration. The orders of steps 52 to 54 can be replaced appropriately.

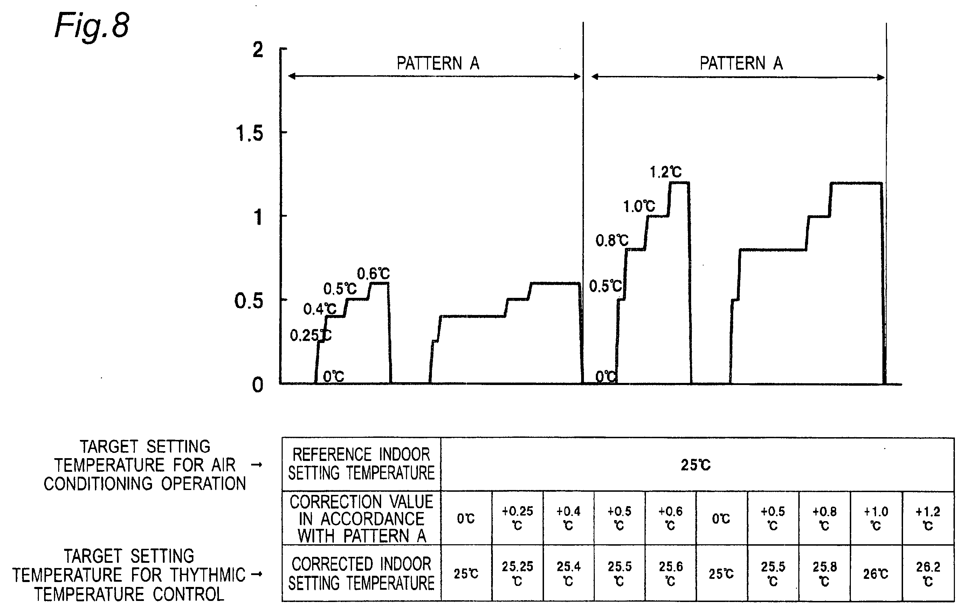

Fig. 8 includes a graph and a chart exemplifying setting of the reference indoor setting temperature, the correction value, and the corrected indoor setting temperature. As indicated in Fig. 8, during cooling operation according to the embodiment, the correction value has a positive value or is zero and the corrected indoor setting temperature is equal to or more than the reference indoor setting temperature. Air conditioning operation is performed with the corrected indoor setting temperature as the target temperature. A frequency of the compressor 11 can be decreased in this case, so that air conditioning operation can be performed with the higher energy saving feature and improved comfort in comparison to a case where the target temperature is kept constant with no variation. The correction value is not limited to the embodiment but is appropriately changeable.

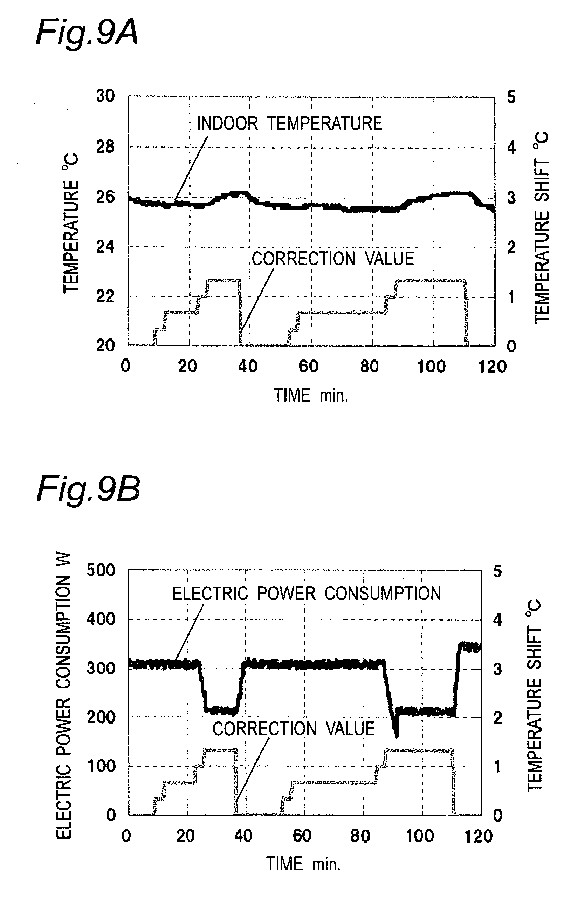

Figs. 9A and 9B are graphs exemplifying temporal variation in indoor temperature, electric power consumption, and correction value, under the rhythmic temperature control during cooling operation. According to Figs. 9A and 9B, there is a section while the indoor temperature is substantially constant but electric power consumption is decreased. More specifically, it is found that the rhythmic temperature control according to the embodiment achieves improvement in energy saving feature.

The human body detection sensors 4 according to the embodiment are capable of detecting a region where a human body is located. It is possible to perform wind hit operation of blowing toward the human body and wind avoided operation of blowing so as to avoid the human body by adjusting angles of the vertical blade 22 and the horizontal blade (not shown).

In wind hit operation, wind hits a human body that is thus less likely to feel variation in indoor temperature. In contrast, in wind avoided operation, wind avoids a human body that is thus likely to sensitively feel variation in indoor temperature.

The rhythmic temperature control is accordingly not performed during wind avoided operation in the embodiment. This configuration achieves air conditioning operation that does not affect user's comfort.

The rhythmic temperature control is performed when a human body is unlikely to feel variation in temperature in the embodiment. The disclosure is, however, not limited to this configuration. Some users may desire forcible operation of the rhythmic temperature control so that energy saving operation is achieved. For example, the remote control device 30 can be provided with a button for forcible operation of the rhythmic temperature control, so that the rhythmic temperature control is started when a user presses this button. The user forcibly commands the rhythmic temperature control in this case. It is thus preferred to prevent automatic switching from the rhythmic temperature control to normal air conditioning operation.

Described next is the rhythmic temperature control during heating operation.

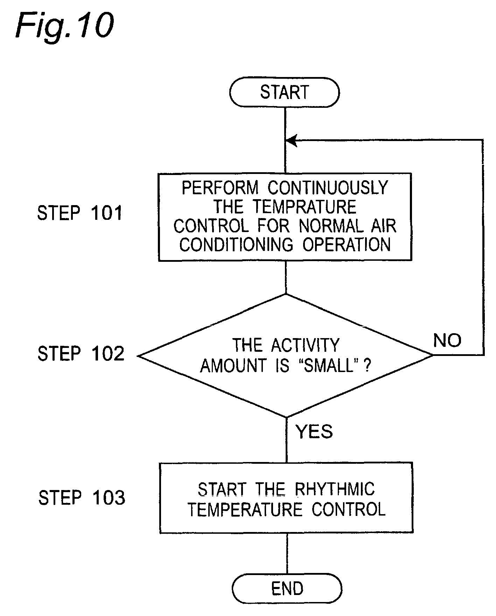

Fig. 10 is a flowchart of a determination flow for switching from the temperature control for normal air conditioning operation to the rhythmic temperature control during heating operation.

Initially in step 101, the temperature control for normal air conditioning operation is performed, in other words, air conditioning operation is performed in accordance with the reference indoor setting temperature.

In step 102, the human body detection sensors 4 determine whether or not the activity amount is "small". If the activity amount is determined to be "small", the process proceeds to step 103 and the rhythmic temperature control is started. In contrast, if the activity amount is determined not to be "small", the process returns to step 101 and normal air conditioning operation is performed. The activity amount is used as the determination reference value, as already described.

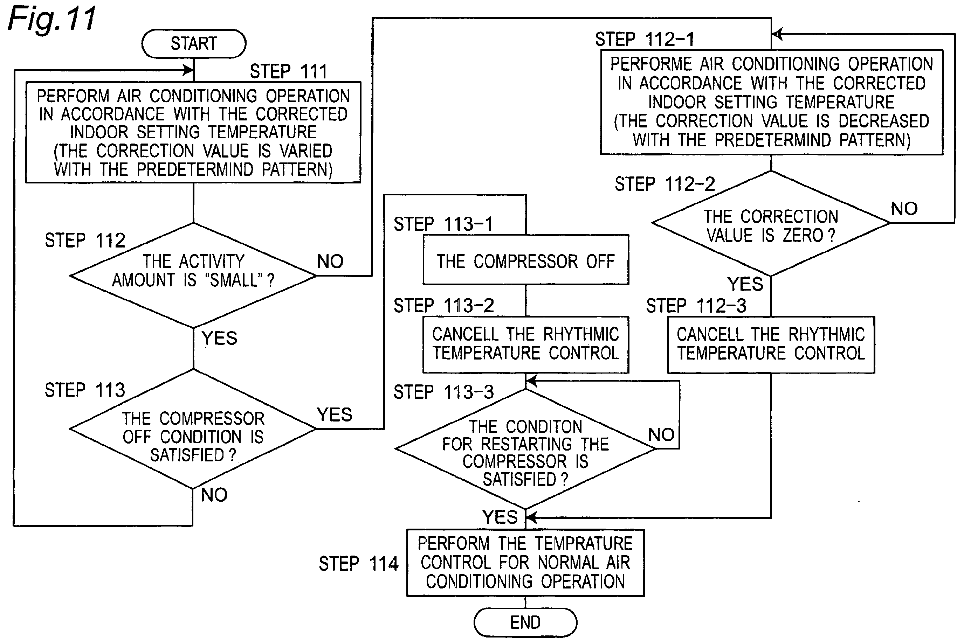

Fig. 11 is a flowchart of a determination flow for switching from the rhythmic temperature control to the temperature control for normal air conditioning operation during heating operation.

Initially in step 111, air conditioning operation is performed in accordance with the corrected indoor setting temperature that is obtained by adding the correction value to the reference indoor setting temperature. More specifically, the elements in the refrigeration cycle are controlled so that the indoor temperature is adjusted to the corrected indoor setting temperature.

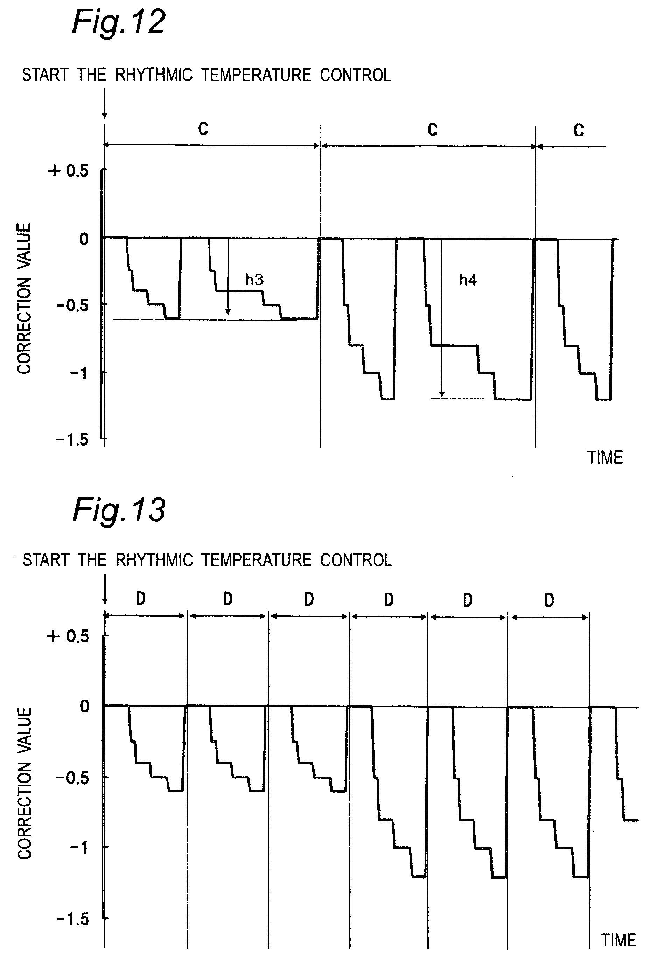

As indicated in Fig. 12, the correction value is varied so as to increase and decrease periodically in accordance with a predetermined pattern in the rhythmic temperature control. The correction value according to the embodiment is set to vary stepwise within the range from 0 °C to -1.2 °C and repeat a cycle of a pattern "C" that has two peak values.

Furthermore, the correction value according to the embodiment is set so that a variation range is different between before and after a predetermined period (e.g. 60 minutes) elapses from the start of the rhythmic temperature control. More specifically, the absolute value of a variation range h3 of the first pattern "C" is smaller than (e.g. a half of) the absolute value of a variation range h4 of the second and following patterns "C". This configuration achieves energy saving operation with maximum suppression of temperature variation. Energy saving operation can be improved further by increasing the variation range of the second and following patterns "C". The predetermined period is preliminarily set on the basis of a test or the like.

The energy saving feature can be improved by increase in area of a figure that is surrounded with the variation pattern of the correction value and the temporal axis. The correction value is varied stepwise in the embodiment. It is thus possible to increase the area and further improve the energy saving feature.

As exemplified in Fig. 13, the correction value can be alternatively set to repeat a cycle of a pattern D that has one peak value.

In step 112, the human body detection sensors 4 determine whether or not the activity amount is "small". If the activity amount is determined to be "small", the process proceeds to step 113. In contrast, if the activity amount is determined not to be "small", the process proceeds to step 112-1.

In step 113, it is determined whether or not a condition for stopping the compressor 11 (a compressor OFF condition) is satisfied. If the condition for stopping the compressor 11 is satisfied, the process proceeds to step 113-1. In contrast, if the condition for stopping the compressor 11 is not satisfied, the process returns to step 111 and the rhythmic temperature control is performed continuously. In the embodiment, the compressor is stopped under the condition that a predetermined period elapses in a state where a difference between the indoor temperature and the corrected indoor setting temperature is equal to or more than a predetermined difference.

The condition for stopping the compressor 11 is not limited to the above. For example, another condition can be added as a condition for stopping the compressor 11. The predetermined temperature and the predetermined period are preliminarily set on the basis of a test or the like. The predetermined temperature and the predetermined period can be changed appropriately in accordance with the system.

In step 112-1, air conditioning operation is performed with the corrected indoor setting temperature as the target temperature without cancellation of the rhythmic temperature control. The correction value according to the embodiment is set not in accordance with the pattern "C" but so as to increase stepwise. If the correction value is rapidly zeroized, rotational speed of the compressor 11 is rapidly varied, so that the indoor temperature can be varied too much or electric power consumption can be increased. The correction value, which is set to increase stepwise, suppresses occurrence of such a state.

In step 112-2, it is determined whether or not the correction value is zero. If the correction value is not zero, the process returns to step 112-1. In contrast, if the correction value is zero, the process proceeds to step 112-3.

In step 112-3, the rhythmic temperature control is cancelled. When the rhythmic temperature control is cancelled, the process proceeds to step 114 and the temperature control for normal air conditioning operation is performed.

In step 113-1, the compressor 11 is stopped (compressor OFF).

In step 113-2, the rhythmic temperature control is cancelled. The compressor 11 is not in operation in this case, so that the correction value can be rapidly zeroized to cancel the rhythmic temperature control.

In step 113-3, it is determined whether or not a condition for restarting the compressor 11 is satisfied. If the condition for restarting the compressor 11 is satisfied, the process proceeds to step 114, so that the compressor 11 is restarted and the temperature control for normal air conditioning operation is performed.

Whether or not the condition for restarting the compressor 11 is satisfied is preferably determined by whether or not a difference between the reference indoor setting temperature and the indoor temperature reaches a predetermined difference. For example, the compressor is restarted at timing when a difference between the indoor temperature and the target temperature reaches a predetermined difference during heating operation. Accordingly, the difference between the reference indoor setting temperature and the indoor temperature is larger than the difference between the corrected indoor setting temperature and the indoor temperature during heating operation. The compressor 11 can be restarted earlier in comparison to a case of restarting the compressor 11 when the difference between the corrected indoor setting temperature and the indoor temperature reaches a predetermined difference. This configuration achieves prevention of affecting the environment in the room. The difference between the indoor temperature and the corrected indoor setting temperature as the condition for stopping the compressor 11 and the difference between the indoor temperature and the reference indoor setting temperature as the condition for restarting the compressor 11 can be values equal to each other or different from each other.

If the condition for starting the rhythmic temperature control described with reference to Fig. 10 is satisfied while the temperature control for normal air conditioning operation is performed in step 114, air conditioning operation is performed with switching from the temperature control for normal air conditioning operation to the rhythmic temperature control.

As described above, the activity amount is determined in step 112 and then whether or not to stop the compressor is determined in step 113. The disclosure is, however, not limited to the above configuration. The orders of steps 112 and 113 can be replaced with each other appropriately.

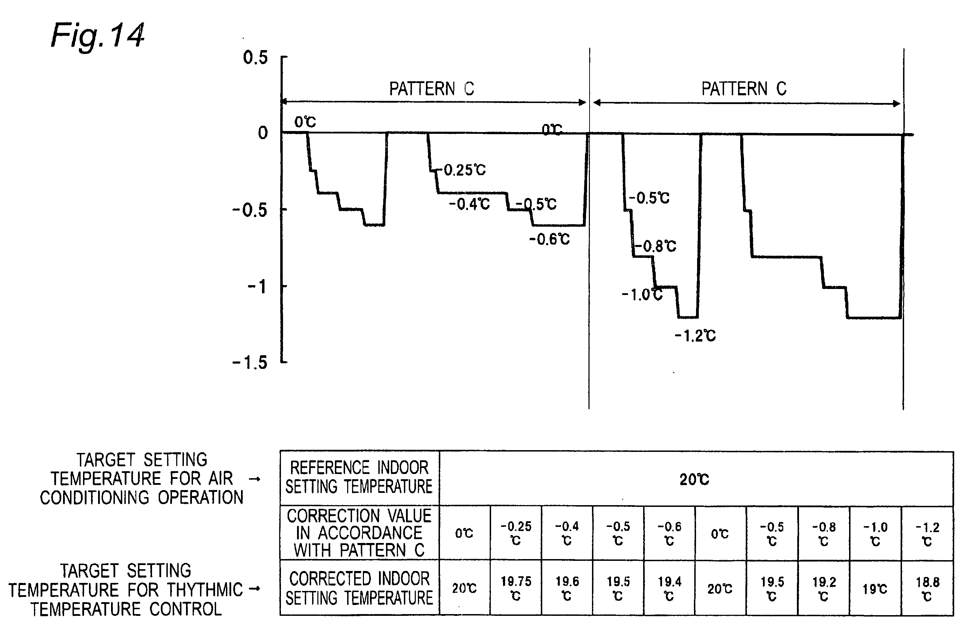

Fig. 14 includes a graph and a chart exemplifying setting of the reference indoor setting temperature, the correction value, and the corrected indoor setting temperature. As indicated in Fig. 14, during heating operation according to the embodiment, the correction value has a negative value or is zero and the corrected indoor setting temperature is equal to or less than the reference indoor setting temperature. Air conditioning operation is performed with the corrected indoor setting temperature as the target temperature. A frequency of the compressor 11 can be decreased in this case, so that air conditioning operation can be performed with the higher energy saving feature and improved comfort in comparison to a case where the target temperature is kept constant with no variation. The correction value is not limited to the embodiment but is appropriately changeable.

As indicated in Fig. 14, the correction value in the first pattern "C" has a minimum value of -0.6 °C and the correction value in the second and following patterns "C" has a minimum value of -1.2 °C in the embodiment. It is because, after a while from the start of the rhythmic temperature control, the temperature on a wall of a room is unstable and the indoor temperature tends to be varied easily by radiation heat from the wall.

The rhythmic temperature control is preferably not performed in wind avoided operation also during heating operation. This configuration achieves air conditioning operation that does not affect user's comfort.

Also for the heating operation, the remote control device 30 can be provided with a button for forcible operation of the rhythmic temperature control, so that the rhythmic temperature control is started when a user presses this button. The user forcibly commands the rhythmic temperature control in this case. It is thus preferred to prevent automatic switching from the rhythmic temperature control to normal air conditioning operation.

As described above, the air conditioner according to the invention is capable of keeping user's comfort as well as performing energy saving operation.

Although the invention has been fully described in connection with the preferred embodiment thereof with reference to the accompanying drawings, it is to be noted that various changes and modifications are apparent to those skilled in the art. Such changes and modifications are to be understood as included within the scope of the invention as defined by the appended claims unless they depart therefrom.

### INDUSTRIAL APPLICABILITY

As described above, the disclosure is applicable to an air conditioner including one outdoor unit and one indoor unit connected thereto as well as to a multiple air conditioner including one outdoor unit and a plurality of indoor units connected thereto.

### Explanation of reference numerals

- 1.: indoor unit
- 2.: outdoor unit
- 7.: temperature sensor
- 8.: humidity sensor
- 11.: compressor
- 30.: remote control device

## Claims

1. An air conditioner comprising:
an indoor temperature detection device which detects an indoor temperature;
a human body detection device which detects a motion of a human body; and
a remote control device which sets a reference indoor setting temperature; wherein
when an activity amount based on the motion of the human body detected by the human body detection device is larger than a predetermined amount, the air conditioner controls an air condition so that the indoor temperature is adjusted to the reference indoor setting temperature set with the remote control device,
when the activity amount is smaller than the predetermined amount, the air conditioner controls the air condition so that the indoor temperature is adjusted to a corrected indoor setting temperature obtained by adding a correction value to the reference indoor setting temperature, and
**characterized in that** the correction value is varied so as to increase and decrease periodically in accordance with a predetermined pattern.

2. The air conditioner according to claim 1, wherein the corrected indoor setting temperature is set to be lower than the reference indoor setting temperature during heating operation.

3. The air conditioner according to claim 1, wherein a variation range of increasing and decreasing of the correction value is different between before and after a predetermined period elapses from a start of the air condition control in accordance with the corrected indoor setting temperature.

4. The air conditioner according to claim 3, wherein a variation range of the correction value before the predetermined period elapses from the start of the air condition control in accordance with the corrected indoor setting temperature is smaller than a variation range of the correction value after the predetermined period elapses from the start of the air condition control in accordance with the corrected indoor setting temperature.

5. The air conditioner according to claim 1, further comprising a compressor which compresses a refrigerant, wherein
the compressor is stopped when a predetermined period elapses in a state where a difference between the indoor temperature and the corrected indoor setting temperature is equal to or more than a predetermined difference, and
the compressor is restarted when a difference between the indoor temperature and the reference indoor setting temperature is equal to or more than a predetermined difference after the compressor is stopped.

6. The air conditioner according to any one of claims 1 to 5, wherein the correction value varies stepwise.

7. The air conditioner according to any one of claims 1 to 6, wherein the air conditioner is configured to perform wind hit operation of blowing toward the human body and wind avoided operation of blowing so as to avoid the human body, and
the air conditioner is configured not to perform the air condition control of adjusting the indoor temperature to the corrected indoor setting temperature during wind avoided operation.

8. The air conditioner according to any one of claims 1 to 7, wherein the remote control device includes a command unit that commands forcible air conditioning operation in accordance with the corrected indoor setting temperature.

9. The air conditioner according to any one of claims 1 to 8, Wherein when the activity amount exceeds the predetermined amount while the air conditioner performs air conditioning operation so as to adjust the indoor temperature to the corrected indoor setting temperature, the air conditioner varies stepwise the correction value so as to approximate the corrected indoor setting temperature to the reference indoor setting temperature.

10. The air conditioner according to any one of claims 1 to 9, wherein the corrected indoor setting temperature is higher than the reference indoor setting temperature during cooling operation.

## Patentansprüche

1. Klimagerät, umfassend:
eine Innentemperatur-Erfassungsvorrichtung, die eine Innentemperatur erfasst;
eine Personenerfassungsvorrichtung, die eine Bewegung eines menschlichen Körpers erfasst; und
eine Fernbedienungsvorrichtung, die eine Referenz-Soll-Innentemperatur einstellt; wobei,
wenn ein Aktivitätsausmaß auf Grundlage der durch die Personenerfassungsvorrichtung erfassten Bewegung des menschlichen Körpers größer ist als ein vorgegebenes Ausmaß, das Klimagerät eine Klimatisierung so steuert, dass die Innentemperatur auf die mit der Fernbedienungsvorrichtung eingestellte Referenz-Soll-Innentemperatur eingestellt wird,
wenn das Aktivitätsausmaß geringer ist als das vorgegebene Ausmaß, das Klimagerät die Klimatisierung so steuert, dass die Innentemperatur auf eine korrigierte Soll-Innentemperatur eingestellt wird, die erhalten ist durch ein Addieren eines Korrekturwerts zu der Referenz-Soll-Innentemperatur, und
**dadurch gekennzeichnet, dass** der Korrekturwert so verändert wird, dass er sich regelmäßig gemäß einem vorgegebenen Muster erhöht und verringert.

2. Klimagerät nach Anspruch 1, wobei die korrigierte Soll-Innentemperatur während eines Heizbetriebs so festgelegt ist, dass sie niedriger ist als die Referenz-Soll-Innentemperatur.

3. Klimagerät nach Anspruch 1, wobei ein Veränderungsbereich des Erhöhens und Verringerns des Korrekturwerts unterschiedlich ist vor und nach Ablauf eines vorgegebenen Zeitraums von einem Start der Klimatisierungsregelung gemäß der korrigierten Soll-Innentemperatur.

4. Klimagerät nach Anspruch 3, wobei ein Veränderungsbereich des Korrekturwerts vor Ablauf des vorgegebenen Zeitraums vom Start der Klimatisie-rungsregelung gemäß der korrigierten Soll-Innentemperatur kleiner ist als ein Veränderungsbereich des Korrekturwerts nach Ablauf des vorgegebenen Zeitraums vom Start der Klimatisierungsregelung gemäß der korrigierten Soll-Innentemperatur.

5. Klimagerät nach Anspruch 1, weiter umfassend einen Kompressor, der ein Kältemittel verdichtet, wobei
der Kompressor angehalten wird, wenn ein vorgegebener Zeitraum in einem Zustand verstrichen ist, in dem eine Differenz zwischen der Innentemperatur und der korrigierten Soll-Innentemperatur gleich oder größer als eine vorgegebene Differenz ist, und
der Kompressor wieder gestartet wird, wenn eine Differenz zwischen der Innentemperatur und der Referenz-Soll-Innentemperatur gleich oder größer als eine vorgegebene Differenz ist, nachdem der Kompressor angehalten ist.

6. Klimagerät nach einem der Ansprüche 1 bis 5, wobei sich der Korrekturwert schrittweise ändert.

7. Klimagerät nach einem der Ansprüche 1 bis 6, wobei das Klimagerät ausgelegt ist, einen windigen Betrieb des Blasens zum menschlichen Körper hin und einen Wind vermeidenden Betrieb des derartigen Blasens durchzuführen, dass der menschliche Körper vermieden wird, und
das Klimagerät ausgelegt ist, die Klimatisierungsregelung des Einstellens der Innentemperatur nach der korrigierten Soll-Innentemperatur während des Wind vermeidenden Betriebs nicht durchzuführen.

8. Klimagerät nach einem der Ansprüche 1 bis 7, wobei die Fernbedienungsvorrichtung eine Befehlseinheit enthält, die zwangsweise einen Klimatisierungsbetrieb gemäß der korrigierten Soll-Innentemperatur befiehlt.

9. Klimagerät nach einem der Ansprüche 1 bis 8, wobei, wenn das Aktivitätsausmaß das vorgegebene Ausmaß überschreitet, während das Klimagerät einen Klimatisierungsbetrieb so durchführt, dass es die Innentemperatur nach der korrigierten Soll-Innentemperatur einstellt, das Klimagerät den Korrekturwert schrittweise verändert, sodass die korrigierte Soll-Innentemperatur an die Referenz-Soll-Innentemperatur angenähert wird.

10. Klimagerät nach einem der Ansprüche 1 bis 9, wobei die korrigierte Soll-Innentemperatur während eines Kühlbetriebs höher ist als die Referenz-Soll-Innentemperatur.

## Revendications

1. Climatiseur comportant:
un dispositif de détection de la température intérieure, qui détecte une température intérieure;
un dispositif de détection du corps humain, qui détecte un mouvement d'un corps humain; et
un dispositif de commande à distance, qui règle une température de réglage intérieure de référence; dans lequel
lorsqu'un niveau d'activité du mouvement du corps humain détecté par le dispositif de détection du corps humain est supérieur à un niveau prédéterminé, le climatiseur commande une condition d'air de sorte que la température intérieure soit réglée sur la température de réglage intérieure de référence réglée à l'aide du dispositif de commande à distance,
lorsque le niveau d'activité est inférieur au niveau prédéterminé, le climatiseur commande la condition d'air de sorte que la température intérieure soit réglée sur une température de réglage intérieure corrigée obtenue par addition d'une valeur de correction à la température de réglage intérieure de référence, et
**caractérisé en ce que** la valeur de correction est modifiée de manière à augmenter et à baisser périodiquement en accord avec un modèle prédéterminé.

2. Climatiseur selon la revendication 1, dans lequel la température de réglage intérieure corrigée est réglée de manière à être inférieure à la température de réglage intérieure de référence durant le fonctionnement de chauffage.

3. Climatiseur selon la revendication 1, dans lequel une plage de variation d'augmentation et de baisse de la valeur de correction est différente entre la période avant et après qu'une période prédéterminée expire à partir d'un démarrage de la régulation de la climatisation en accord avec la température de réglage intérieure corrigée.

4. Climatiseur selon la revendication 3, dans lequel une plage de variation de la valeur de correction avant l'expiration de la période prédéterminée à partir du démarrage de la régulation de la climatisation en accord avec la température de réglage intérieure corrigée est inférieure à une plage de variation de la valeur de correction après l'expiration de la période prédéterminée à partir du démarrage de la régulation de la climatisation en accord avec la température de réglage intérieure corrigée.

5. Climatiseur selon la revendication 1, comprenant en outre un compresseur, qui comprime un réfrigérant, dans lequel
le compresseur est arrêté lorsqu'une période prédéterminée expire dans un état dans lequel une différence entre la température intérieure et la température de réglage intérieure corrigée est égale ou supérieure à une différence prédéterminée, et
le compresseur est redémarré lorsqu'une différence entre la température intérieure et la température de réglage intérieure de référence est égale ou supérieure à une différence prédéterminée après l'arrêt du compresseur.

6. Climatiseur selon l'une des revendications 1 à 5, dans lequel la valeur de correction varie pas à pas.

7. Climatiseur selon l'une des revendications 1 à 6, dans lequel le climatiseur est configuré pour exécuter un fonctionnement à coups de vent consistant à souffler en direction du corps humain et un fonctionnement à empêchement du vent, consistant à souffler en évitant le corps humain, et
le climatiseur est configuré pour ne pas exécuter la régulation de la condition de l'air consistant à régler la température intérieure sur la température de réglage intérieure corrigée durant le fonctionnement à empêchement du vent.

8. Climatiseur selon l'une des revendications 1 à 7, dans lequel le dispositif de commande à distance comporte une unité de commande qui commande un fonctionnement de climatisation forcée de l'air en accord avec la température de réglage intérieure corrigée.

9. Climatiseur selon l'une des revendications 1 à 8, dans lequel lorsque le niveau d'activité dépasse le niveau prédéterminé tandis que le climatiseur exécute le fonctionnement de conditionnement de l'air de manière à ajuster la température intérieure sur la température de réglage intérieure corrigée, le climatiseur varie pas à pas la valeur corrigée de manière à approximer la température de réglage intérieure corrigée à la température de réglage intérieure de référence.

10. Climatiseur selon l'une des revendications 1 à 9, dans lequel la température de réglage intérieure corrigée est supérieure à la température de réglage intérieure de référence durant le fonctionnement de refroidissement.
